# EUROPEAN PATENT APPLICATION

(11) **EP 4 834 999 A1**
(43) Date of publication of application: **04.11.2026**
(21) Application number: 24912660.8
(22) Date of filing: 20.12.2024
(51) Int. Cl.: C08L 67/06, C08K 3/22, C08K 7/02

(54) **RESIN COMPOSITION, MOLDING MATERIAL, AND REFRACTORY MATERIAL**

(30) Priority: 28.12.2023 JP 2023222636
(71) Applicant: Japan Composite Co., Ltd., Tokyo 103-0022 (JP)
(72) Inventor: AKAI, Ikuo, Tokyo 103-0022 (JP); HAKOTANI, Masahiro, Tokyo 103-0022 (JP)
(74) Representative: Hoffmann Eitle
(86) International application number: PCT/JP2024/045168
(87) International publication number: WO 2025/142771

(57) **Abstract**

A resin composition includes a resin component containing a thermosetting resin containing an unsaturated polyester, and a polymerizable monomer; and aluminum hydroxide. A glass transition temperature when a mixture of the thermosetting resin and the polymerizable monomer is cured is 0°C or more and 60°C or less. A content ratio of the polymerizable monomer with respect to the total amount of the polymerizable monomer and the thermosetting resin is 40% by mass or less. A content ratio of the aluminum hydroxide with respect to 100 parts by mass of the resin component is 120 parts by mass or more. A mass ratio of the aluminum hydroxide with respect to the polymerizable monomer is 15.0 or less.

## Description

### TECHNICAL FIELD

The present invention relates to a resin composition, a molding material, and a fire-resistant material, and in detail, to a resin composition, a molding material containing the resin composition, and a fire-resistant material containing a cured product of the molding material.

### BACKGROUND ART

Conventionally, molded articles made of a molding material (particularly, Sheet Molding Compound (SMC), Bulk Molding Compound (BMC), Thick Molding Compound (TMC)) containing a resin composition have been used in a wide range of fields because having excellent mechanical properties, water resistance, electrical insulation, and corrosion resistance.

As such a molding material, a molding material containing an unsaturated polyester resin, a polyvinyl acetate resin, aluminum hydroxide particles, and chopped glass fibers has been proposed (see, for example, Patent Document 1).

### Citation List

### Patent Document

Patent Document 1: Japanese Unexamined Patent Publication No. 2004-161813

### SUMMARY OF THE INVENTION

### PROBLEM TO BE SOLVED BY THE INVENTION

On the other hand, the molding material may be used as a material for a fire-resistant material. Such a fire-resistant material is required to have flexibility depending on the purpose and the use. In addition, from the viewpoint of space saving and weight saving, the fire-resistant material is required to be thinned and to have excellent flame retardancy even when it is a thin plate.

The present invention provides a resin composition for producing a fire-resistant material having excellent flexibility and having excellent flame retardancy even when it is a thin plate, a molding material containing the resin composition, and a fire-resistant material containing a cured product of the molding material.

### MEANS FOR SOLVING THE PROBLEM

The present invention [1] includes a resin composition including: a resin component containing a thermosetting resin containing an unsaturated polyester, and a polymerizable monomer; and aluminum hydroxide, wherein a glass transition temperature when a mixture of the thermosetting resin and the polymerizable monomer is cured is 0°C or more and 60°C or less, wherein a content ratio of the polymerizable monomer with respect to a total amount of the polymerizable monomer and the thermosetting resin is 40% by mass or less, wherein a content ratio of the aluminum hydroxide with respect to 100 parts by mass of the resin component is 120 parts by mass or more, and wherein a mass ratio of the aluminum hydroxide with respect to the polymerizable monomer is 15.0 or less.

The present invention [2] includes the resin composition described in the above-described [1], wherein the unsaturated polyester is a reaction product of a polybasic acid and a polyhydric alcohol, and wherein the polybasic acid includes a straight-chain saturated aliphatic dibasic acid having 8 or more carbon atoms.

The present invention [3] includes the resin composition described in the above-described [1] or [2], wherein the resin component does not contain a thermoplastic resin, or wherein when the resin component contains a thermoplastic resin, a content ratio of the thermoplastic resin with respect to the resin component is 5% by mass or less.

The present invention [4] includes a molding material including: the resin composition described in any one of the above-described [1] to [3]; and reinforcing fibers.

The present invention [5] includes a fire-resistant material including: a cured product of the molding material described in the above-described [4].

### EFFECTS OF THE INVENTION

In the resin composition of the present invention, the glass transition temperature when the mixture of the thermosetting resin and the polymerizable monomer is cured is 0°C or more and 60°C or less, and the content ratio of the polymerizable monomer with respect to the total amount of the polymerizable monomer and the thermosetting resin is 40% by mass or less. Therefore, the fire-resistant material obtained by using the resin composition has excellent flexibility.

Furthermore, in the resin composition, the content ratio of the aluminum hydroxide with respect to 100 parts by mass of the resin component is 120 parts by mass or more, and the mass ratio of the aluminum hydroxide with respect to the polymerizable monomer is 15.0 or less. Therefore, the fire-resistant material obtained by using the resin composition has excellent flame retardancy even when it is a thin plate.

The molding material of the present invention includes the resin composition of the present invention. Therefore, the fire-resistant material obtained by using this molding material has excellent flexibility, and has excellent flame retardancy even when it is a thin plate.

The fire-resistant material of the present invention includes a cured product of the molding material of the present invention. Therefore, the fire-resistant material has excellent flexibility, and has excellent flame retardancy even when it is a thin plate.

### DESCRIPTION OF THE EMBODIMENTS

### 1. Resin Composition

A resin composition contains a resin component and aluminum hydroxide.

### <Resin Component>

The resin component contains a thermosetting resin and a polymerizable monomer.

### [Thermosetting Resin]

The thermosetting resin contains an unsaturated polyester resin as an essential component. The unsaturated polyester resin contains an unsaturated polyester and a polymerizable monomer (described later). That is, the thermosetting resin contains an unsaturated polyester. In other words, the unsaturated polyester resin is an unsaturated polyester resin composition containing an unsaturated polyester and a polymerizable monomer (described later).

The unsaturated polyester is obtained by the reaction of a polybasic acid with a polyhydric alcohol.

The polybasic acid contains a polybasic acid having an ethylenically unsaturated double bond (hereinafter, referred to as an ethylenically unsaturated bond-containing polybasic acid) as an essential component and a polybasic acid having no ethylenically unsaturated double bond (hereinafter, referred to as an ethylenically unsaturated bond-free polybasic acid) as an optional component.

Examples of the ethylenically unsaturated bond-containing polybasic acid include ethylenically unsaturated aliphatic dibasic acids and anhydrides thereof, halides of ethylenically unsaturated aliphatic dibasic acids, and alkyl esters of ethylenically unsaturated aliphatic dibasic acids.

Examples of the ethylenically unsaturated aliphatic dibasic acid include maleic acid, fumaric acid, itaconic acid, and dihydromuconic acid. The ethylenically unsaturated bond-containing polybasic acid includes, for example, an acid anhydride derived from the above-described ethylenically unsaturated aliphatic dibasic acid. Examples of the acid anhydride derived from the ethylenically unsaturated aliphatic dibasic acid include maleic anhydride.

As the ethylenically unsaturated bond-containing polybasic acid, maleic acid and fumaric acid are preferably used. As the ethylenically unsaturated bond-containing polybasic acid, fumaric acid is more preferably used.

Examples of the ethylenically unsaturated bond-free polybasic acid include saturated aliphatic polybasic acids, saturated alicyclic polybasic acids, aromatic polybasic acids, anhydrides of these acids, halides of these acids, and alkyl esters of these acids.

Examples of the saturated aliphatic polybasic acid include saturated aliphatic dibasic acids.

Examples of the saturated aliphatic dibasic acid include a saturated aliphatic dibasic acid having 2 to 7 carbon atoms and a saturated aliphatic dibasic acid having 8 or more carbon atoms.

Examples of the saturated aliphatic dibasic acid having 2 to 7 carbon atoms include oxalic acid, malonic acid, succinic acid, methylsuccinic acid, 2,2-dimethylsuccinic acid, 2,3-dimethylsuccinic acid, 3,3-dimethylsuccinic acid, glutaric acid, 2-methylglutaric acid, 3-methylglutaric acid, 2,2-dimethylglutaric acid, adipic acid, and pimelic acid.

Examples of the saturated aliphatic dibasic acid having 8 or more carbon atoms include a straight-chain saturated aliphatic dibasic acid having 8 or more carbon atoms. Examples of the straight-chain saturated aliphatic dibasic acid having 8 or more carbon atoms include suberic acid, azelaic acid, and sebacic acid. As the straight-chain saturated aliphatic dibasic acid having 8 or more carbon atoms, sebacic acid is preferably used.

In addition, the saturated aliphatic polybasic acid includes an acid anhydride derived from the above-described saturated aliphatic dibasic acid. Examples of the acid anhydride derived from saturated aliphatic dibasic acid include oxalic anhydride and succinic anhydride.

Examples of the saturated alicyclic polybasic acid include saturated alicyclic dibasic acid.

Examples of the saturated alicyclic dibasic acid include HET acid, 1,2-hexahydrophthalic acid, 1,1-cyclobutanedicarboxylic acid, and 1,4-cyclohexanedicarboxylic acid (cis- or trans-1,4-cyclohexanedicarboxylic acid or mixtures thereof). The saturated alicyclic polybasic acid includes an acid anhydride derived from the above-described saturated alicyclic dibasic acid. Examples of the acid anhydride derived from saturated alicyclic dibasic acid include HET anhydride.

Examples of the aromatic polybasic acid include aromatic dibasic acid.

Examples of the aromatic dibasic acid include phthalic acid (orthophthalic acid, isophthalic acid, terephthalic acid), trimellitic acid, and pyromellitic acid. Examples of the aromatic polybasic acid include acid anhydrides derived from the above-described aromatic dibasic acids. Examples of the acid anhydrides derived from the aromatic dibasic acids include phthalic anhydride. As the aromatic dibasic acid, isophthalic acid is preferably used.

As the ethylenically unsaturated bond-free polybasic acid, saturated aliphatic polybasic acid and aromatic dibasic acid are preferably used.

The polybasic acids may be used alone or in combination of two or more thereof.

When the polybasic acid contains an ethylenically unsaturated bond-containing polybasic acid and an ethylenically unsaturated bond-free polybasic acid, the content ratio of the ethylenically unsaturated bond-containing polybasic acid with respect to 100 mol of the total polybasic acids is, for example, 10 mol % to 30 mol %, preferably 15 mol % to 20 mol %, from the viewpoint of flexibility. The content ratio of the ethylenically unsaturated bond-free polybasic acid is, for example, 70 mol % to 90 mol %, preferably, for example, 80 mol % to 85 mol %.

The polybasic acid preferably contains a saturated aliphatic dibasic acid having 8 or more carbon atoms (preferably a straight-chain saturated aliphatic dibasic acid having 8 or more carbon atoms). When the polybasic acid contains a saturated aliphatic dibasic acid having 8 or more carbon atoms (preferably, a straight-chain saturated aliphatic dibasic acid having 8 or more carbon atoms), the water resistance can be improved.

The content ratio of the saturated aliphatic dibasic acid having 8 or more carbon atoms with respect to 100 mol of the total polybasic acids is 40 mol % to 70 mol %, preferably 50 mol % to 65 mol %, from the viewpoint of water resistance.

The polybasic acid preferably consists of an ethylenically unsaturated bond-containing polybasic acid and an ethylenically unsaturated bond-free polybasic acid.

Examples of the polyhydric alcohol include a dihydric alcohol and a trihydric alcohol.

Examples of the dihydric alcohol include aliphatic diols, alicyclic diols, and aromatic diols.

Examples of the aliphatic diol include alkanediol and etherdiol.

Examples of the alkanediol include an alkanediol having 2 to 10 carbon atoms. Examples of the alkanediol having 2 to 10 carbon atoms include ethylene glycol, propylene glycol (1,2- or 1,3-propanediol or a mixture thereof), butylene glycol (1,2- or 1,3- or 1,4-butylene glycol or a mixture thereof.), 1,5-pentanediol, 1,6-hexanediol, neopentyl glycol, 2-methyl-1,3-propanediol, 2-butyl-2-ethyl-1,3-propanediol, and 3-methyl-1,5-pentanediol, 2,2,2-trimethylpentanediol, and 3,3-dimethylolheptane. As the alkanediol, ethylene glycol and propylene glycol are preferably used. As the alkanediol, propylene glycol is more preferably used.

Examples of the ether diol include diethylene glycol, triethylene glycol, and dipropylene glycol. As the ether diol, diethylene glycol is preferably used.

Examples of the alicyclic diol include cyclohexanediol (1,2- or 1,3- or 1,4-cyclohexanediol or a mixture thereof), cyclohexanedimethanol (1,2- or 1,3- or 1,4-cyclohexanedimethanol or a mixture thereof), cyclohexanediethanol (1,2- or 1,3- or 1,4-cyclohexanediethanol or a mixture thereof), and hydrogenated bisphenol A.

Examples of the aromatic diol include an ethylene oxide adduct of bisphenol A and a propylene oxide adduct of bisphenol A.

Examples of the trihydric alcohol include glycerin, trimethylolpropane, and triisopropanolamine.

As the polyhydric alcohol, a dihydric alcohol is preferably used. As the polyhydric alcohol, aliphatic diol is more preferably used.

The polyhydric alcohols may be used alone or in combination of two or more thereof.

The unsaturated polyester is prepared by reacting a polybasic acid with a polyhydric alcohol.

The equivalent ratio (hydroxyl group of the polyhydric alcohol/carboxyl group of the polybasic acid) of the polyhydric alcohol with respect to the polybasic acid is, for example, 0.9 to 1.2, preferably 0.95 to 1.1.

The reaction temperature is, for example, 150°C to 250°C, or preferably 190°C to 230°C.

In the above-described reaction, a known solvent and a known reaction catalyst may be blended as necessary.

Thus, an unsaturated polyester is prepared.

The unsaturated polyester has an acid value (measurement method: in accordance with JIS K6901 (2008)) of, for example, 5 mgKOH/g to 40 mgKOH/g, preferably 10 mgKOH/g to 30 mgKOH/g, and more preferably 20 mgKOH/g to 30 mgKOH/g.

The unsaturated polyester has a weight-average molecular weight of, for example, 2000 to 25000, preferably 4000 to 20000.

The weight-average molecular weight is a weight-average molecular weight in terms of polystyrene measured by GPC (gel permeation chromatography).

The unsaturated polyesters may be used alone or in combination of two or more thereof.

The thermosetting resin contains a vinyl ester resin as an optional component. The vinyl ester resin contains a vinyl ester and a polymerizable monomer (described later). That is, the thermosetting resin contains a vinyl ester. In other words, the vinyl ester resin is a vinyl ester resin composition containing a vinyl ester and a polymerizable monomer (described later).

The vinyl ester is an addition reaction product of epoxy resin and unsaturated monocarboxylic acid.

The epoxy resin contains at least one epoxy group. Examples of the epoxy resin include bisphenol type epoxy resins (for example, bisphenol A type epoxy resins, bisphenol F type epoxy resins, brominated bisphenol A type epoxy resins), novolac epoxy resins (for example, phenol novolak type epoxy resins, cresol novolak type epoxy resins, brominated novolak type epoxy resins), aliphatic epoxy resins, alicyclic epoxy resins, hydrogenated bisphenol type epoxy resins, and amine epoxy resins. As the epoxy resin, a bisphenol type epoxy resin is preferably used. As the epoxy resin, a bisphenol A type epoxy resin is more preferably used.

The epoxy resins may be used alone or in combination of two or more thereof.

The epoxy resin has an epoxy equivalent of, for example, 100 g/eq to 700 g/eq, preferably 150 g/eq to 300 g/eq. The epoxy equivalent can be measured in accordance with JIS K 7236.

The unsaturated monocarboxylic acid contains at least one unsaturated double bond and at least one carboxy group. Examples of the unsaturated monocarboxylic acid include unsaturated monofatty acid (for example, (meth)acrylic acid, crotonic acid, sorbic acid, etc.), aromatic unsaturated monocarboxylic acid (for example, cinnamic acid, etc.), and ester bond-containing unsaturated monocarboxylic acid (for example, a reaction product of an acid anhydride and an unsaturated alcohol, etc.). The (meth)acrylic is synonymous with methacrylic and/or acrylic. As the unsaturated monocarboxylic acid, methacrylic acid is preferably used.

The unsaturated monocarboxylic acids may be used alone or in combination of two or more thereof.

The vinyl ester is prepared by subjecting the above-described epoxy group of the epoxy resin and the above-described carboxy group of the unsaturated monobasic acid to a ring-opening addition reaction.

The thermosetting resins may be used alone or in combination of two or more thereof. When the unsaturated polyester resin and the vinyl ester resin are used in combination, the content ratio of the unsaturated polyester with respect to 100 parts by mass of the total amount of the unsaturated polyester and the vinyl ester is, for example, 55 parts by mass to 99 parts by mass, preferably 90 parts by mass to 99 parts by mass. The content ratio of the vinyl ester with respect to 100 parts by mass of the total amount of the unsaturated polyester and the vinyl ester is, for example, 1 part by mass to 45 parts by mass, preferably 1 part by mass to 10 parts by mass.

The content ratio of the unsaturated polyester with respect to the resin component is, for example, 55% by mass to 90% by mass, preferably 60% by mass to 85% by mass, more preferably 65% by mass to 80% by mass, and still more preferably 70% by mass to 78% by mass.

The content ratio of the vinyl ester with respect to the resin component is 1% by mass to 10% by mass.

The thermosetting resin preferably contains no vinyl ester resin and consists of an unsaturated polyester resin.

### [Polymerizable Monomer]

Examples of the polymerizable monomer include styrene-based monomers and (meth)acrylic acid ester-based monomers.

Examples of the styrene-based monomer include styrene, vinyl toluene, t-butyl styrene, and chlorostyrene.

Examples of the (meth)acrylic acid ester-based monomer include (meth)acrylic acid alkyl ester, (meth)acrylic acid allyl ester, ring structure-containing (meth)acrylic acid ester, (meth)acrylic acid hydroxyalkyl ester, (meth)acrylic acid alkoxyalkyl ester, (meth)acrylic acid aminoalkyl ester, (meth)acrylic acid fluoroalkyl ester, and polyfunctional (meth)acrylic acid ester. Examples of the (meth)acrylic acid alkyl ester include methyl (meth)acrylate, ethyl (meth)acrylate, isopropyl (meth)acrylate, butyl (meth)acrylate, n-butyl (meth)acrylate, t-butyl (meth)acrylate, isobutyl (meth)acrylate), 2-ethylhexyl (meth)acrylate, lauryl (meth)acrylate, tridecyl (meth)acrylate, and stearyl (meth)acrylate. Examples of the (meth)acrylic acid allyl ester include allyl (meth)acrylate. Examples of the ring structure-containing (meth)acrylic acid ester include cyclohexyl (meth)acrylate, benzyl (meth)acrylate, isobornyl (meth)acrylate, glycidyl (meth)acrylate, tetrahydrofurfuryl (meth)acrylate, dicyclopentenyl (meth)acrylate, dicyclopentanyl (meth)acrylate, and dicyclopentenyloxyethyl (meth)acrylate. Examples of the (meth)acrylic acid hydroxyalkyl ester include 2-hydroxyethyl (meth)acrylate and 2-hydroxypropyl (meth)acrylate. Examples of the (meth)acrylic acid alkoxyalkyl ester include 2-methoxyethyl (meth)acrylate and 2-ethoxyethyl (meth)acrylate. Examples of the (meth)acrylic acid aminoalkyl ester include dimethylaminoethyl (meth)acrylate, diethylaminoethyl (meth)acrylate, and chloride salts thereof. Examples of the (meth)acrylic acid fluoroalkyl ester include trifluoroethyl (meth)acrylate and heptadecafluorodecyl (meth)acrylate. Examples of the polyfunctional (meth)acrylic acid ester include ethylene glycol di(meth)acrylate, diethylene glycol di(meth)acrylate, trimethylolpropane tri(meth)acrylate, pentaerythritol tetra(meth)acrylate, and dipentaerythritol hexa(meth)acrylate.

As the polymerizable monomer, a styrene-based monomer is preferably used. As the polymerizable monomer, styrene is more preferably used.

The polymerizable monomers may be used alone or in combination of two or more thereof.

The content ratio of the polymerizable monomer with respect to the resin component is, for example, 15% by mass to 40% by mass, preferably 20% by mass to 35% by mass, and more preferably 20% by mass to 30% by mass.

The content ratio of the polymerizable monomer with respect to the total amount of the polymerizable monomer and the thermosetting resin is 40% by mass or less, preferably 35% by mass or less, more preferably 30% by mass or less, still more preferably 28% by mass or less, and for example, 5% by mass or more, preferably 10% by mass or more, and more preferably 15% by mass or more, and from the viewpoint of water resistance, is further preferably 18% by mass or more, and particularly preferably 20% by mass or more.

When the content ratio of the polymerizable monomer with respect to the total amount of the polymerizable monomer and the thermosetting resin is the above-described upper limit or less, the flexibility can be improved.

On the other hand, when the content ratio of the polymerizable monomer with respect to the total amount of the polymerizable monomer and the thermosetting resin exceeds the above-described upper limit, the flexibility and appearance of the fire-resistant material are deteriorated. In addition, the amount of the residual polymerizable monomer increases, and the environmental burden increases.

### [Thermoplastic Resin]

Examples of the thermoplastic resin include polyethylene, polystyrene, a styrene-based thermoplastic elastomer, crosslinked polystyrene, a polyvinyl acetate-polystyrene block copolymer, polyvinyl acetate, polymethyl methacrylate, and saturated polyester resin. As the thermoplastic resin, polystyrene is preferably used.

The thermoplastic resins may be used alone or in combination of two or more thereof.

The thermoplastic resin may be prepared as a polymerizable monomer solution of the thermoplastic resin by dissolving the thermoplastic resin in the above-described polymerizable monomer.

In the polymerizable monomer solution of the thermoplastic resin, the solid content concentration of the thermoplastic resin is, for example, 10% by mass to 70% by mass, preferably 20% by mass to 40% by mass.

The thermoplastic resins may be used alone or in combination of two or more thereof.

The content ratio of the thermoplastic resin with respect to the resin component is, for example, 15% by mass or less, preferably 10% by mass or less, more preferably 5% by mass or less, and still more preferably 0% by mass.

That is, more preferably, the resin component does not contain a thermoplastic resin.

When the content ratio of the thermoplastic resin is the above-described upper limit or less, the flame retardancy can be improved.

### [Aluminum Hydroxide]

The aluminum hydroxide imparts the flame retardancy.

The aluminum hydroxide has an average particle size of, for example, 1 µm or more, and, for example, 50 µm or less, preferably 25 µm or less.

The average particle size of the aluminum hydroxide can be determined by preparing a particle size distribution curve using a laser diffraction/scattering particle size distribution measuring apparatus and calculating a particle size equivalent to 50% by mass.

The content ratio of the aluminum hydroxide with respect to 100 parts by mass of the resin component is 120 parts by mass or more, preferably 140 parts by mass or more, more preferably 160 parts by mass or more, still more preferably 200 parts by mass or more, particularly preferably 250 parts by mass or more, most preferably 300 parts by mass or more, still more preferably 340 parts by mass or more, and for example, 450 parts by mass or less, preferably 400 parts by mass or less.

When the content ratio of the aluminum hydroxide is the above-described lower limit or more, the flame retardancy can be improved.

On the other hand, when the content ratio of the aluminum hydroxide is less than the above-described lower limit, the flame retardancy is lowered.

When the content ratio of the aluminum hydroxide is the above-described upper limit or less, an excessive increase in the viscosity of the resin composition can be suppressed.

The mass ratio (aluminum hydroxide/polymerizable monomer) of the aluminum hydroxide with respect to the polymerizable monomer is 15.0 or less, for example, 3.0 or more, preferably 5.0 or more, more preferably 7.0 or more, even more preferably 9.0 or more, particularly preferably 11.0 or more, most preferably 13.0 or more, and even more preferably 14.0 or more.

When the above-described mass ratio is the above-described upper limit or less, the flame retardancy of the fire-resistant material obtained by using the resin composition can be improved even when the fire-resistant material is a thin plate.

On the other hand, when the above-described mass ratio exceeds the above-described upper limit, the viscosity of the resin composition may excessively increase, and a fire-resistant material may not be produced.

When the above-described mass ratio is the above-described lower limit or more, the flame retardancy can be improved.

### <Additive>

If necessary, the resin composition may be blended with an additive within a range that does not impair the effects of the present invention.

Examples of the additive include a release agent, a curing agent, a polymerization inhibitor, a flame retardant, a thickener, a filler, a colorant, a wet dispersant, a pattern material, an antibacterial agent, a hydrophilic agent, a photocatalyst, an ultraviolet absorber, an ultraviolet stabilizer, an anti-separation agent, a silane coupling agent, an antistatic agent, a thixotropy imparting agent, a thixostabilizer, and a polymerization accelerator. The additives may be used alone or in combination of two or more thereof.

### [Release Agent]

Examples of the release agent include fatty acid, fatty acid metal salt, liquid wax, a fluoropolymer, and a silicon-based polymer. Examples of the fatty acid include stearic acid and lauric acid. Examples of the fatty acid metal salt include zinc stearate and calcium stearate.

As the release agent, a fatty acid metal salt is preferably used, and zinc stearate is more preferably used.

The release agents may be used alone or in combination of two or more thereof.

The content ratio of the release agent with respect to 100 parts by mass of the resin component is, for example, 1 part by mass to 10 parts by mass, preferably 3 parts by mass to 8 parts by mass.

### [Curing Agent]

Examples of the curing agent include peroxide. Examples of the peroxide include benzoyl peroxide, t-butylperoxyisopropyl carbonate, t-amylperoxyisopropyl carbonate, t-hexylperoxyisopropyl monocarbonate, 1,1-bis(t-butylperoxy)cyclohexane, t-butylperoxy-2-ethylhexanoate, amylperoxy-2-ethylhexanoate, 2-ethylhexylperoxy-2-ethylhexanoate, t-butyl peroxybenzoate (, t-hexyl peroxybenzoate, and t-hexyl peroxyacetate. As the curing agent, t-butyl peroxyisopropyl carbonate is preferably used.

The curing agents may be used alone or in combination of two or more thereof.

The content ratio of the curing agent with respect to 100 parts by mass of the resin component is, for example, 0.1 parts by mass to 5 parts by mass, preferably 1 part by mass to 3 parts by mass.

### [Polymerization Inhibitor]

The polymerization inhibitor adjusts the pot life and the curing reaction.

Examples of the polymerization inhibitor include a hydroquinone compound, a benzoquinone compound, a catechol compound, a phenol compound, and an N-oxyl compound.

As the polymerization inhibitor, a benzoquinone compound, a hydroquinone compound, and an N-oxyl compound are preferably used.

Examples of the benzoquinone compound include p-benzoquinone.

Examples of the hydroquinone compound include hydroquinone, methylhydroquinone, and t-butylhydroquinone. As the hydroquinone compound, t-butylhydroquinone is preferably used.

As the polymerization inhibitor, a benzoquinone compound is more preferably used.

The polymerization inhibitors may be used alone or in combination of two or more thereof.

The content ratio of the polymerization inhibitor with respect to 100 parts by mass of the resin component is, for example, 0.01 parts by mass to 2 parts by mass, preferably 0.02 parts by mass to 1 part by mass.

### [Flame Retardant]

Examples of the flame retardant (excluding aluminum hydroxide) include phosphorus-containing flame retardant, nitrogen-containing flame retardant, expanded graphite, halogen-based flame retardant, diantimony trioxide, zinc stannate, and zinc borate. As the flame retardant, phosphorus-containing flame retardant, nitrogen-containing flame retardant, flame retardant having both phosphorus and nitrogen, and expanded graphite are preferably used.

The phosphorus-containing flame retardant contains phosphorus and no nitrogen. Examples of the phosphorus-containing flame retardant include red phosphorus, phosphate ester, polyphosphate, and phosphinic acid metal salt.

Examples of the phosphate ester include trimethyl phosphate, triethyl phosphate, tributyl phosphate, and tricresyl phosphate.

Examples of the polyphosphate include polyphosphate aluminum.

Examples of the phosphinic acid metal salt include aluminum trisdiethylphosphinate and aluminum trismethylethylphosphinate.

As the phosphorus-containing flame retardant, a commercially available product can be used. Specifically, examples thereof include the OP series (specifically, Exolit OP1230 (aluminum trisdiethylphosphinate), manufactured by Clariant Chemicals).

As the phosphorus-containing flame retardant, a phosphinic acid metal salt is preferably used, and aluminum trisdiethylphosphinate is more preferably used.

The nitrogen-containing flame retardant contains nitrogen and no phosphorus. Examples of the nitrogen-containing flame retardant include a triazine compound.

The triazine compound is a compound having a triazine skeleton. Examples of the triazine compound include melamine, acetoguanamine, benzoguanamine, melone, melam, succinoguanamine, ethylene dimelamine, triguanamine, and melamine cyanurate.

As the nitrogen-containing flame retardant, a commercially available product can be used. Specifically, examples thereof include MC-4000 (melamine cyanurate, manufactured by Nissan Chemical Corporation).

As the nitrogen-containing flame retardant, a triazine compound is preferably used. As the nitrogen-containing flame retardant, melamine cyanurate is more preferably used.

Examples of the flame retardant having both phosphorus and nitrogen include ammonium polyphosphate and melamine polyphosphate.

The expanded graphite is a graphite intercalation compound obtained by inserting sulfuric acid or the like between flaky natural graphite layers. The expanded graphite is swollen at a temperature of about 150 to 300°C while the interlayers expand.

The expanded graphite has an average particle size of 150 µm or less, preferably 100 µm or less, and, for example, 10 µm or more, preferably 50 µm or more.

The average particle size of the expanded graphite can be determined by observing arbitrary 50 pieces of expanded graphite with an optical microscope, measuring the maximum diameter (major diameter) and the particle diameter (minor diameter) in the direction perpendicular to the maximum diameter, and calculating the average value of the major diameter and the minor diameter.

As the expanded graphite, a commercially available product can also be used. Specifically, examples thereof include 9510045 manufactured by Ito Graphite Co., Ltd.

The flame retardants may be used alone or in combination of two or more thereof.

The content ratio of the flame retardant with respect to 100 parts by mass of the resin component is, for example, 1 part by mass to 30 parts by mass.

### [Thickener]

The thickener is blended to thicken the resin composition to a viscosity suitable for heat compression molding. The thickener is preferably blended before (preferably immediately before) impregnating the reinforcing fibers (described later) with the resin composition.

Examples of the thickener include alkaline earth metal oxides and alkaline earth metal hydroxides. Examples of the alkaline earth metal oxide include magnesium oxide. Examples of the alkaline earth metal hydroxide include magnesium hydroxide and calcium hydroxide. Furthermore, as the thickener, for example, an isocyanate monomer (for example, toluene diisocyanate (TDI), diphenylmethane diisocyanate (MDI)) and the prepolymers thereof can also be used.

As the thickener, alkaline earth metal oxide is preferably used. As the thickener, magnesium oxide is more preferably used.

The thickeners may be used alone or in combination of two or more thereof.

The content ratio of the thickener with respect to 100 parts by mass of the resin component is, for example, 0.1 parts by mass to 20 parts by mass. In particular, when the thickener is an alkaline earth metal oxide and an alkaline earth metal hydroxide, the content ratio of the thickener with respect to 100 parts by mass of the resin component is, for example, 0.1 parts by mass to 1 part by mass. When the thickener is an isocyanate monomer and a prepolymer thereof, the content ratio of the thickener with respect to 100 parts by mass of the resin component is, for example, 0.1 parts by mass to 20 parts by mass.

### [Filler]

The filler is a filler excluding aluminum hydroxide, and examples thereof include an inorganic filler. Examples of the inorganic filler include oxide (for example, alumina, titanium oxide), hydroxide (for example, magnesium hydroxide, except for aluminum hydroxide), carbonate (for example, calcium carbonate), sulfate (for example, barium sulfate), silica (for example, crystalline silica, fused silica, fumed silica, dry silica (AEROSIL)), hollow filler, silicate (for example, silica sand, diatomaceous earth, glass powder, glass balloon, mica, clay, kaolin, talc), fluoride (for example, fluorite), phosphate (for example, calcium phosphate), metal powder, ceramic, milled fiber, and clay mineral (for example, smectite).

The fillers may be used alone or in combination of two or more thereof.

The content ratio of the filler with respect to 100 parts by mass of the resin component is, for example, 30 parts by mass to 200 parts by mass, preferably 50 parts by mass to 150 parts by mass.

### [Colorant]

The colorant is not particularly limited. Examples of the colorant include polyester toners obtained by mixing known pigments such as titanium oxide, carbon black, colcothar, and phthalocyanine blue.

The colorants may be used alone or in combination of two or more thereof.

The content ratio of the colorant with respect to 100 parts by mass of the resin component is, for example, 1 part by mass to 20 parts by mass.

### <Preparation of Resin Composition>

The resin composition is prepared by mixing the resin component, aluminum hydroxide, and an additive that is blended as necessary.

In the above-described preparation, the unsaturated polyester resin can also be prepared by dissolving an unsaturated polyester in the polymerizable monomer (preferably styrene) in advance and, if necessary, blending the additive.

In the preparation of the unsaturated polyester resin, the content ratio of the polymerizable monomer with respect to 100 parts by mass of the unsaturated polyester is, for example, 10 parts by mass to 40 parts by mass, preferably 20 parts by mass to 35 parts by mass.

In addition, in the above-described preparation, the vinyl ester resin can also be prepared by dissolving a vinyl ester in the polymerizable monomer (preferably styrene) in advance and, if necessary, blending the above-described additive.

In the preparation of the vinyl ester resin, the content ratio of the polymerizable monomer with respect to 100 parts by mass of the vinyl ester is, for example, 50 parts by mass to 80 parts by mass, preferably 60 parts by mass to 70 parts by mass.

In addition, after the preparation of the unsaturated polyester resin and/or the vinyl ester resin, the unsaturated polyester resin and/or the vinyl ester resin may be further blended with the polymerizable monomer when being mixed with other components (aluminum hydroxide and additives blended as necessary).

Thus, a resin composition is prepared.

In such a resin composition, the glass transition temperature when the mixture of the thermosetting resin and the polymerizable monomer is cured is 0°C to 60°C, preferably 10°C to 50°C, more preferably 20°C to 40°C, and still more preferably 30°C to 35°C.

In detail, the above-described glass transition temperature is 0°C or more, preferably 10°C or more, more preferably 20°C or more, still more preferably 30°C or more, and 60°C or less, preferably 50°C or less, more preferably 40°C or less, still more preferably 35°C or less.

When the above-described glass transition temperature is the above-described lower limit or more, the moldability can be improved. On the other hand, when the above-described glass transition temperature is less than the above-described lower limit, the moldability is lowered.

When the above-described glass transition temperature is the above-described lower limit or more, the water resistance can also be improved.

When the above-described glass transition temperature is the above-described upper limit or less, the flexibility is improved.

On the other hand, when the above-described glass transition temperature exceeds the above-described upper limit, the flexibility is lowered.

The measurement method of the above-described glass transition temperature will be detailed in Examples below.

The molding material can be prepared by blending reinforcing fibers into such a resin composition. A fire-resistant material can be obtained from such a molding material by a known method.

### 2. Molding Material

The molding material includes the resin composition and reinforcing fibers.

### <Reinforcing Fiber>

Examples of the reinforcing fibers include inorganic fiber, organic fiber, and natural fiber. Examples of the inorganic fiber include glass fiber, carbon fiber, metal fiber, and ceramic fiber. Examples of the organic fiber include polyvinyl alcohol fiber, polyester fiber, polyamide fiber, fluororesin fiber, and phenol fiber. Examples of the natural fiber include, for example, hemp and kenaf.

As the reinforcing fibers, inorganic fiber is preferably used. As the reinforcing fibers, glass fiber is more preferably used.

Examples of the shape of the reinforcing fibers include a cloth shape (for example, roving cloth), a mat shape (for example, chopped strand mat, preformable mat, continuous strand mat, and surfacing mat), a strand shape, a roving shape, a nonwoven fabric shape, and a paper shape.

The length of the reinforcing fiber is not particularly limited, and is, for example, 1.5 mm or more, from the viewpoint of improving the strength, preferably 5 mm or more, more preferably 20 mm or more, and, for example, 80 mm or less, preferably 40 mm or less.

### <Preparation of Molding Material >

To prepare the molding material, the reinforcing fibers are blended into the resin composition. Specifically, the reinforcing fibers are impregnated with the resin composition.

Examples of the method of preparing the resin composition include known methods. Specifically, examples thereof include SMC (sheet molding compound), TMC (thick molding compound), and BMC (bulk molding compound). Preferably, SMC and BMC are used.

The content ratio of the reinforcing fibers with respect to the molding material is, for example, 10% by mass to 50% by mass, preferably 10% by mass to 30% by mass.

Thus, a molding material (preferably, a sheet-shaped molding material) containing the resin composition and the reinforcing fibers is obtained.

The molding material includes the above-described resin composition. Therefore, the fire-resistant material obtained by using this molding material has excellent flexibility, and has excellent flame retardancy even when it is a thin plate.

### 3. Fire-resistant Material

The fire-resistant material includes a cured product of the above-described molding material.

To cure the molding material, first, the molding material is aged to thicken so that the molding material is subjected to heat compression molding (described later).

In the aging, the aging temperature is, for example, 20°C or more, and, for example, 50°C or less.

The aging time is, for example, 8 hours or more, and, for example, 120 hours or less.

As a result, the shape of the molding material is retained.

Next, the molding material is subjected to heat compression molding by a known method.

The conditions for the heat compression molding are appropriately set according to the purpose and the use. In the heat compression molding, the molding temperature is, for example, 100°C to 200°C. The molding pressure is, for example, 0.1 MPa to 20 MPa, preferably 1 MPa to 15 MPa, and more preferably 5 MPa to 12 MPa.

Thus, the molding material is shaped and cured, thereby obtaining a fire-resistant material.

Examples of the molding method by shaping and curing include a press molding method, an injection molding method, a transfer molding method, a calendaring molding method, a pultrusion molding method, a resin transfer molding method, a preform matched die molding method, a double belt press molding method, and an extrusion molding method. As the molding method by shaping and curing, a press molding method, an injection molding method, a double press molding method, and a calendaring molding method are preferably used. As the molding method by shaping and curing, a press molding method and an injection molding method are more preferably used. As a molding method by shaping and curing, a press molding method is more preferably used.

The fire-resistant material has a thickness of, for example, 4.0 mm or less, preferably 3.5 mm or less, more preferably 3.0 mm or less, further preferably 2.5 mm or less, particularly preferably 2.0 mm or less, most preferably 1.5 mm or less, further 1.0 mm or less, further 0.8 mm or less, further 0.6 mm or less, and, for example 0.2 mm or more.

In addition, from the viewpoint of attaching various components to the fire-resistant material, the fire-resistant material may have a thick portion having a relatively large thickness and a thin portion having a relatively small thickness in addition to the portion having the above-described thickness. Such a thick portion and a thin portion are formed, for example, to form ribs or bosses for attaching various components.

The fire-resistant material includes a cured product of the above-described molding material. Therefore, the fire-resistant material has excellent flexibility, and has excellent flame retardancy even when it is a thin plate.

Such a fire-resistant material is suitably used, for example, as a fire-resistant sheet, a connector cover of an electrical component, a gasket (sealing material for fixing), a bracket (supporting component), a bus-bar, a harness (electric wire in which terminals of a plurality of wires are subjected to terminal processing and connector processing so as to be connected to another equipment) connector portion, a supporting component, an insulation (insulating, blocking material), a filter, a plug, a clip, and a sealing material. The fire-resistant material is preferably used as a fire-resistant sheet (a fire-resistant sheet having a sheet shape, preferably a fire-resistant sheet having a uniform thickness and a sheet shape).

### 4. Operations and Effects

In the resin composition, the glass transition temperature when the mixture of the thermosetting resin and the polymerizable monomer is cured is 0°C or more and 60°C or less. Therefore, the cured product of the resin composition can be softened and have excellent flexibility.

In the resin composition, the content ratio of the polymerizable monomer with respect to the total amount of the polymerizable monomer and the thermosetting resin is 40% by mass or less. Therefore, the fire-resistant material obtained by using this resin composition has excellent flexibility.

In detail, the molding material of Patent Document 1 includes an unsaturated polyester resin (unsaturated polyester resin containing unsaturated polyester and polymerizable monomer), a polyvinyl acetate resin (polyvinyl acetate resin containing polyvinyl acetate and a polymerizable monomer), aluminum hydroxide particles, and chopped glass fibers. The content ratio of the polymerizable monomer with respect to the total amount of the polymerizable monomer and the thermosetting resin is 57.9% by mass.

The polymerizable monomer is a solvent for dissolving the unsaturated polyester. The polymerizable monomer is a crosslinkable monomer (reactive diluent) capable of crosslinking with the unsaturated polyester when the unsaturated polyester resin is cured.

In Patent Document 1, an excess of the polymerizable monomer is blended with respect to the unsaturated polyester. The excessive polymerizable monomers are polymerized with each other without reacting with the unsaturated polyester and form a cured product of the polymerizable monomer. Such a cured product reduces the flexibility.

On the other hand, in the resin composition, the content ratio of the polymerizable monomer with respect to the total amount of the polymerizable monomer and the thermosetting resin is 40% by mass or less. Therefore, the above-described cured product of the polymerizable monomer can be reduced. As a result, the flexibility can be improved.

In the resin composition, the content ratio of the aluminum hydroxide with respect to 100 parts by mass of the resin component is 120 parts by mass or more, and the mass ratio of the aluminum hydroxide with respect to the polymerizable monomer is 15.0 or less. Therefore, the fire-resistant material obtained by using this resin composition has excellent flame retardancy even when it is a thin plate.

In detail, when the content ratio of the aluminum hydroxide is increased, the flame retardancy is improved, and the mechanical strength of the fire-resistant material can be improved. Therefore, when the content ratio of the aluminum hydroxide is increased, a fire-resistant material having excellent flame retardancy can be produced even when it is a thin plate.

On the other hand, when the content ratio of the aluminum hydroxide is too high, the viscosity of the resin composition excessively increases, and a fire-resistant material cannot be produced.

In terms of the above, in the resin composition, the content ratio of the aluminum hydroxide is adjusted to a predetermined range, and thus a fire-resistant material having excellent flame retardancy can be produced even when it is a thin plate.

The molding material includes the resin composition. Therefore, the fire-resistant material obtained by using this molding material has excellent flexibility, and has excellent flame retardancy even when it is a thin plate.

The fire-resistant material includes the above-described cured product of the molding material. Therefore, the fire-resistant material has excellent flexibility, and has excellent flame retardancy even when it is a thin plate.

### Examples

Hereinafter, the present invention is more detailed in reference to Examples. However, the following descriptions are one embodiment of the present invention. The present invention is not limited by the following descriptions.

The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than"). The "parts" and "%" are based on mass unless otherwise specified.

### <Details of Components>

The trade names and abbreviations of the components used in each Example and each Comparative Example are detailed.
Polystyrene powder: polystyrene (with a number-average molecular weight of about 110000)
Polyvinyl acetate solution: styrene solution of polyvinyl acetate (styrene content: 64%)
Aluminum hydroxide: average particle size 8 µm
Expanded graphite: trade name "9510045", manufactured by Ito Graphite Co., Ltd,
Phosphorus-based flame retardant: phosphinic acid metal salt, trade name "Exolit OP1230", manufactured by Clariant Chemicals
Nitrogen-containing flame retardant, melamine cyanurate, nitrogen content of 49% by mass, trade name "MC-4000", manufactured by Nissan Chemical Corporation.

### <Synthesis of Unsaturated Polyester Resin>

### Synthesis Example 1

An unsaturated polyester was prepared by reacting 2400 parts by mass of propylene glycol, 620 parts by mass of fumaric acid, 3830 parts by mass of sebacic acid, and 1200 parts by mass of isophthalic acid at a reaction temperature of 200°C to reach an acid value of 27 mgKOH/g. Next, 18 parts by mass of styrene was mixed with respect to 100 parts by mass of the unsaturated polyester, thereby obtaining an unsaturated polyester resin (styrene 15% by mass).

### Synthesis Examples 2 to 5

An unsaturated polyester resin was synthesized based on the same manner as in Synthesis Example 1. However, the formulation of each component was changed based on Table 1.

### Synthesis Example 6

9366 parts by mass of diethylene glycol and 8500 parts by mass of isophthalic acid were reacted at a reaction temperature of 200°C to reach an acid value of 15 mgKOH/g. Subsequently, 3345 parts by mass of maleic anhydride was added thereto, and the mixture was reacted at a reaction temperature of 200°C to reach an acid value of 20 mgKOH/g. Thus, an unsaturated polyester was obtained. Then, 67 parts by mass of styrene was mixed with respect to 100 parts by mass of the unsaturated polyester, thereby obtaining an unsaturated polyester resin (styrene 40% by mass).

### <Synthesis of Vinyl Ester Resin>

### Synthesis Example 7

1850 parts by mass (10.0 equivalents) of a bisphenol A type epoxy compound (epoxy equivalent: 185 g/eq), 317 parts by mass (2.78 equivalents) of bisphenol A, and 1.0 part by mass of triethylbenzylammonium chloride as a catalyst were charged into a flask equipped with a stirrer, a reflux condenser, and a gas introduction pipe. Then, the mixture was allowed to react at 170°C for 5 hours while nitrogen was being blown therein. Thus, an epoxy resin having an epoxy equivalent of 298 g/eq was obtained. Thereafter, the epoxy resin was cooled to 120°C, and then 1.0 part by mass of hydroquinone as a polymerization inhibitor, 4.0 parts by mass of triethylbenzylammonium chloride as a catalyst, and 636 parts by mass (7.40 equivalents) of methacrylic acid were added. Then, the mixture was allowed to react at 110°C for 8 hours while air was being blown therein. Thus, a vinyl ester having an acid value of 8.0 mgKOH/g was obtained. Next, 1869 parts by mass of styrene (66.7 parts by mass with respect to 100 parts by mass of vinyl ester) was added to the vinyl ester. Thus, a vinyl ester resin (styrene content: 40% by mass) was obtained.

### <Production of Resin Composition, Molding Material, and Fire-resistant Material>

Examples 1 to 3, Comparative Example 2, Examples 13 to 15, Comparative Example 5, Example 17, Comparative Example 6, Example 22, Example 23, and Comparative Example 7

### [Production of Resin Composition]

In accordance with the formulations described in Tables 2 to 7, the components except the thickener were mixed using a kneader. Thus, a resin composition was obtained.

### [Production of Molding Material]

The thickener was added to the resin composition according to the formulations described in Tables 2 to 7, and then reinforcing fibers were added and mixed. Thus, a molding material (BMC) was obtained.

### [Production of Fire-resistant Material]

The molding material was subjected to heat compression molding using a 300 mm×300 mm flat metal plate, thereby producing a fire-resistant material having a predetermined thickness.

In detail, the molding was carried out under the conditions of a mold temperature of 140°C on both the product surface and the back surface, a molding pressure of 10 MPa, and a retention time in the mold of 300 seconds. Thereafter, the molded product was demolded from the mold and immediately sandwiched between iron plates for cooling.

### Examples 4 to 12, Comparative Example 1, Example 16, and Examples 18 to 21

### [Production of Resin Composition]

In accordance with the formulations described in Tables 2 to 7, the components except the thickener were added in order and mixed. Thus, a resin composition was prepared.

### [Production of Molding Material]

In accordance with the formulations described in Tables 2 to 7, magnesium oxide as a thickener was added to the resin composition, and then reinforcing fibers were added to prepare a molding material (SMC) by using a known SMC impregnation machine.

### [Production of Fire-resistant Material]

A fire-resistant material was produced based on the same manner as in Example 1.

### <Evaluations>

### (Glass Transition Temperature)

To 100 parts by mass of a mixture of a thermosetting resin and a polymerizable monomer, 0.5 parts by mass of 8% by mass cobalt octenate and 1 part by mass of 55% by mass methyl ethyl ketone peroxide were added, and the mixture was stirred, and left to stand at room temperature for 15 hours to be cured. Thereafter, a cured product was produced by after-curing at 140°C for 2 hours, and the loss tangent of the cured product was measured by a DMA method under the conditions of a temperature raising rate of 5°C/min and a frequency of 1 Hertz, and the peak temperature of the measured loss tangent was determined as the glass transition temperature. The results are shown in Tables 2 to 7.

### (Flexibility)

The fire-resistant material of Each of Examples and Comparative Examples was cut into a size of 300 mm in length×100 mm in width. The length direction was bent by applying a force by hand. The flexibility was evaluated based on the following criteria. The results are shown in Tables 2 to 7.

### {Criteria}

∘: The material was bent until the distance between both ends reached 100 mm.
△: The material was bent until the distance between both ends reached 100 mm. However, when the material was held as being bent for 30 seconds, a crack appeared.
×: A crack appeared or the material was broken before the distance between both ends reached 100 mm.

### (Appearance)

The fire-resistant material of each of Examples and Comparative Examples was left to stand at 25°C for 24 hours, and the appearance was observed. The appearance was evaluated based on the following criteria. The results are shown in Tables 2 to 7.

### {Criteria}

∘: Swelling and a non-uniform part were not observed.
△: Swelling was not observed. However, a non-uniform part was not observed.
×: Swelling and a non-uniform part were observed.

### (Shrinkage Ratio)

The fire-resistant material of each of Examples and Comparative Examples was left to stand at 25°C for 24 hours. Thereafter, the dimensions of the four sides of the molded product at 25°C were measured, and the shrinkage ratio was measured based on the ratio with respect to the dimensions of the flat-plate mold. The shrinkage ratio was evaluated based on the following criteria. The results are shown in Tables 2 to 7.

### {Criteria}

∘: Shrinkage was less than 0.1%.
×: Shrinkage was 0.1% or more.

### (Residual Styrene)

The fire-resistant material of each of Examples and Comparative Examples was left to stand at 25°C for one week. A sample solution was prepared in accordance with JIS K6904: 2016, and the residual styrene was quantified. The residual styrene was evaluated based on the following criteria. The results are shown in Tables 2 to 7.

### {Criteria}

∘: The residual styrene was less than 0.5% by mass with respect to 100% by mass of the fire-resistant material.
×: The residual styrene was 0.5% by mass or more with respect to 100% by mass of the fire-resistant material.

### (Flame Retardancy)

The flame retardancy of the fire-resistant material of each of Examples and Comparative Examples was evaluated in accordance with Fire hazard testing: JIS C 60695-11-3:2014, JIS C 60695-11-4:2014 (UL94 V0/5V). The V0 rated material was evaluated as ∘. The results are shown in Tables 2 to 7.

### (Water Resistance)

The fire-resistant material of each of Examples and Comparative Examples was boiled at 100°C for 100 hours. The volume resistivity of the fire-resistant material before boiling and the volume resistivity of the fire-resistant material after boiling were measured in accordance with in accordance with JIS K6911:1995. The ratio (after boiling/before boiling) of the volume resistivities was calculated. The water resistance was evaluated based on the following criteria. The results are shown in Tables 2 to 7.

### {Criteria}

∘: The ratio of the volume resistivities was 1/1000 or more.
△: The ratio of the volume resistivities was 1/10000 or more and less than 1/1000.
×: The ratio of the volume resistivities was less than 1/10000.

### [Table 1]

**Table 1**

| Synthesis Ex. No. | | | | Synthesis Ex. 1 | Synthesis Ex. 2 | Synthesis Ex. 3 | Synthesis Ex. 4 | Synthesis Ex. 5 | Synthesis Ex. 6 |
|---|---|---|---|---|---|---|---|---|---|
| polybasic acid | Ethylenically unsaturated bond-containing polybasic acid | | Fumaric acid | 620 | 620 | 500 | - | - | - |
| | | | Maleic anhydride | - | - | - | 245 | 294 | 3345 |
| | Ethylenically unsaturated bond-free polybasic acid | Saturated aliphatic dibasic acid having 2 to 7 carbon atoms | Adipic acid | - | - | 1050 | - | 658 | - |
| | | Saturated aliphatic dibasic acid having 8 or more carbon atoms | Sebacic acid | 3830 | 3830 | - | 809 | - | - |
| | | Aromatic dibasic acid | Isophthalic acid | 1200 | 1200 | 2429 | 581 | 415 | 8500 |
| Polyhydric alcohol | | | Propylene glycol | 2400 | 2400 | - | 784 | 418 | - |
| | | | Ethylene glycol | - | - | - | - | 310 | - |
| | | | Diethylene glycol | - | - | 2910 | - | - | 9336 |
| Content ratio (mol%) of ethylenically unsaturated bond-containing polybasic acid with respect to 100 mol of polybasic acid | | | | 17.0 | 17.0 | 16.5 | 25.0 | 30.0 | 40.0 |
| Content ratio (mol%) of ethylenically unsaturated bond-free polybasic acid with respect to 100 mol of polybasic acid | | | | 83.0 | 83.0 | 83.5 | 75.0 | 70.0 | 60.0 |
| Content ratio (mol%) of saturated aliphatic dibasic acid having 8 or more carbon atoms with respect to 100 mol of polybasic acid | | | | 60.1 | 60.1 | - | 40.0 | - | - |
| Acid value(mgKOH/g) | | | | 27 | 27 | 15 | 15 | 15 | 20 |
| Styrene content (% by mass) in unsaturated polyester resin | | | | 15 | 25 | 40 | 25 | 25 | 40 |

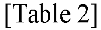

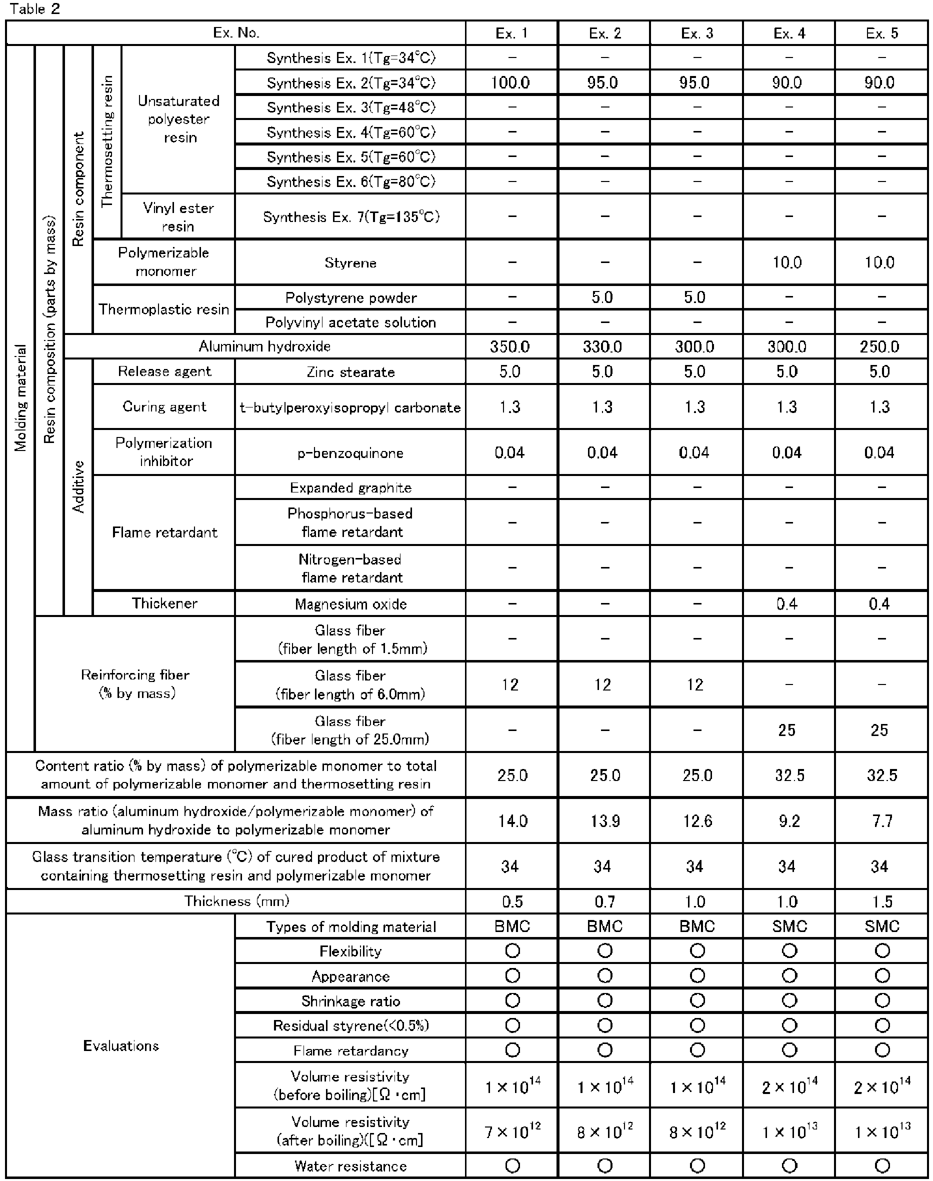

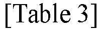

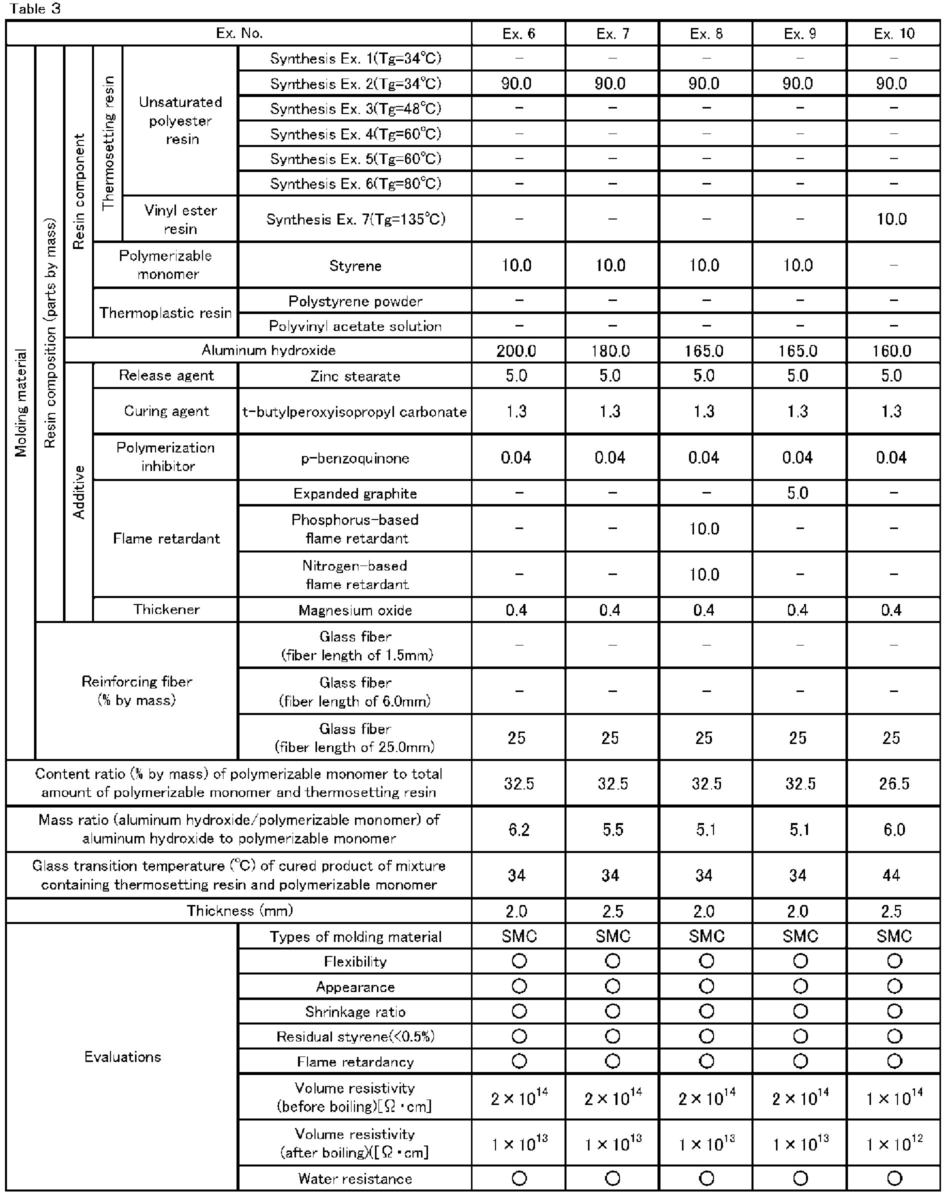

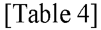

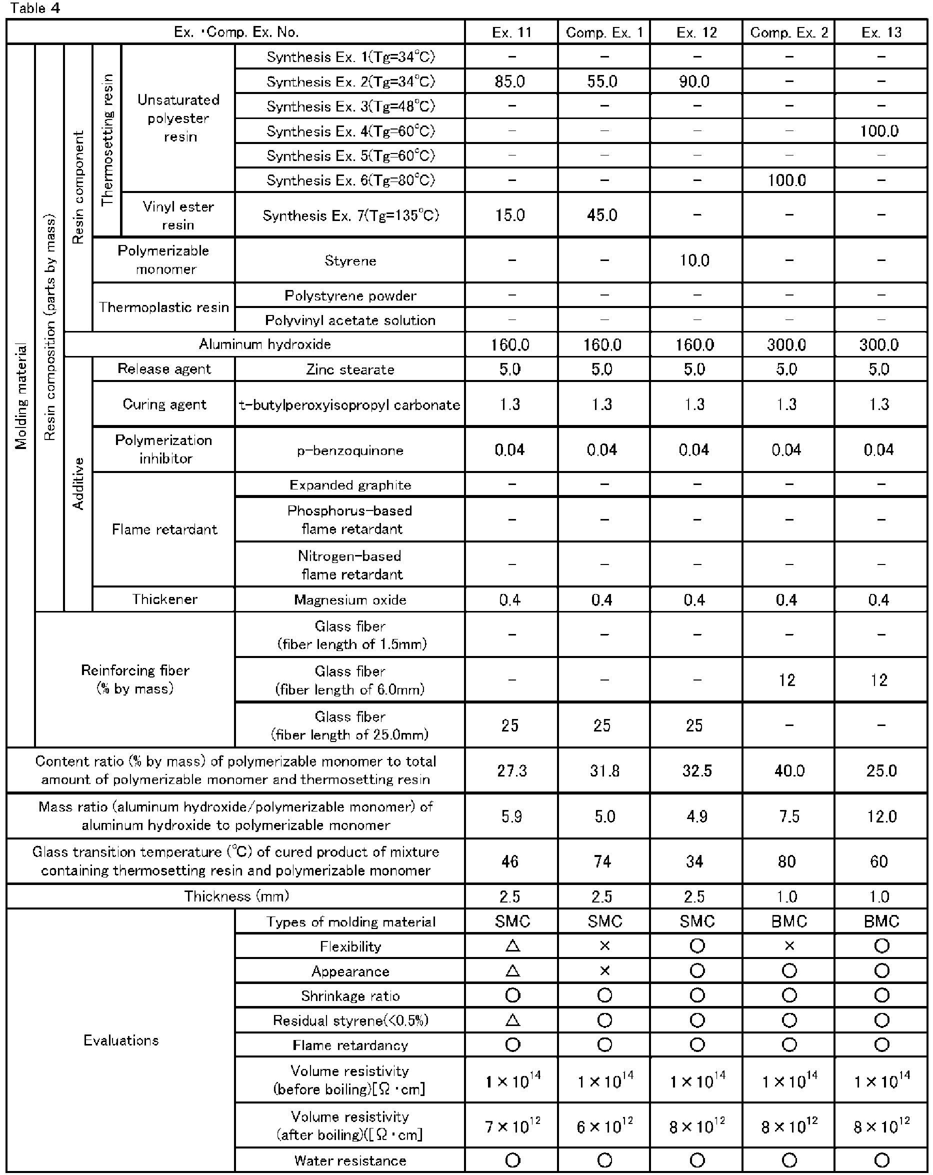

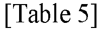

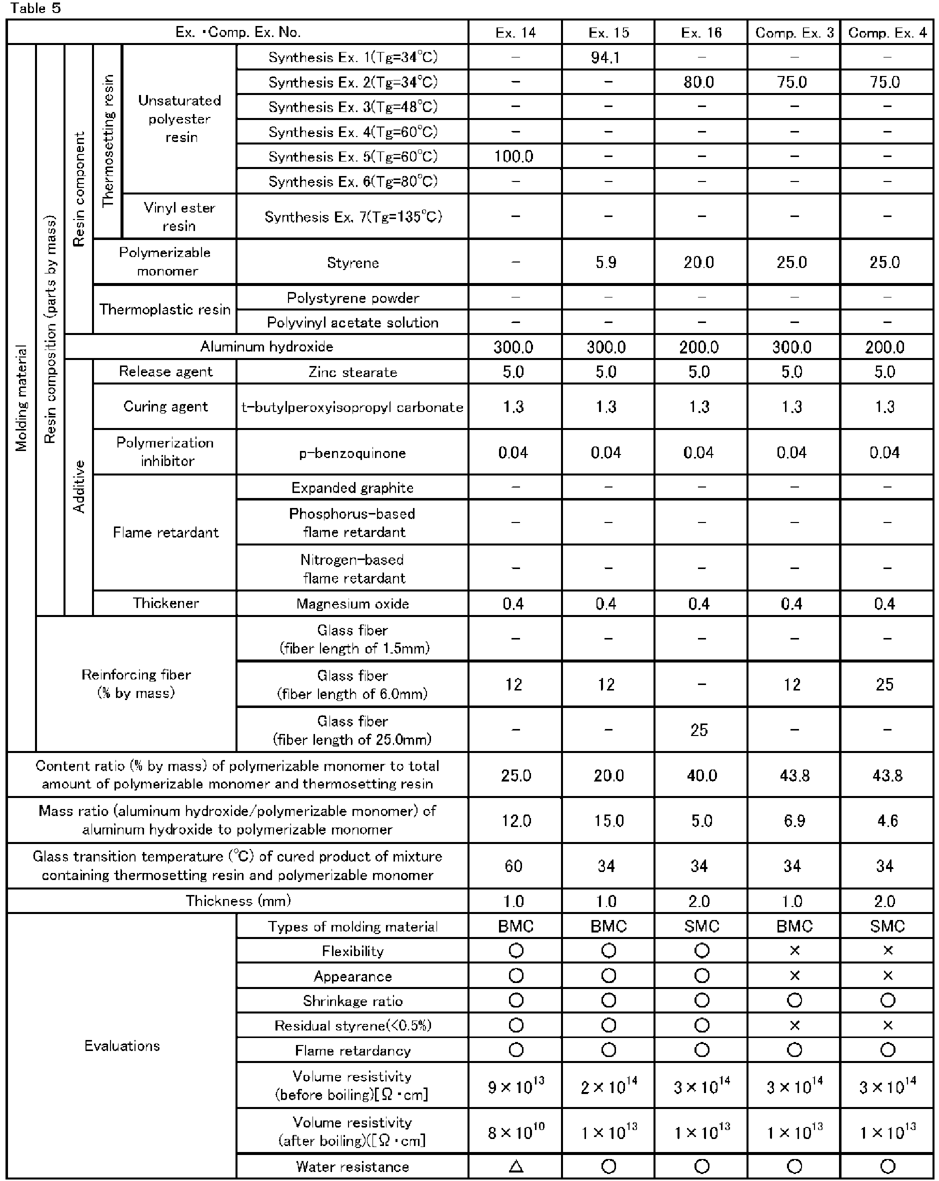

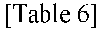

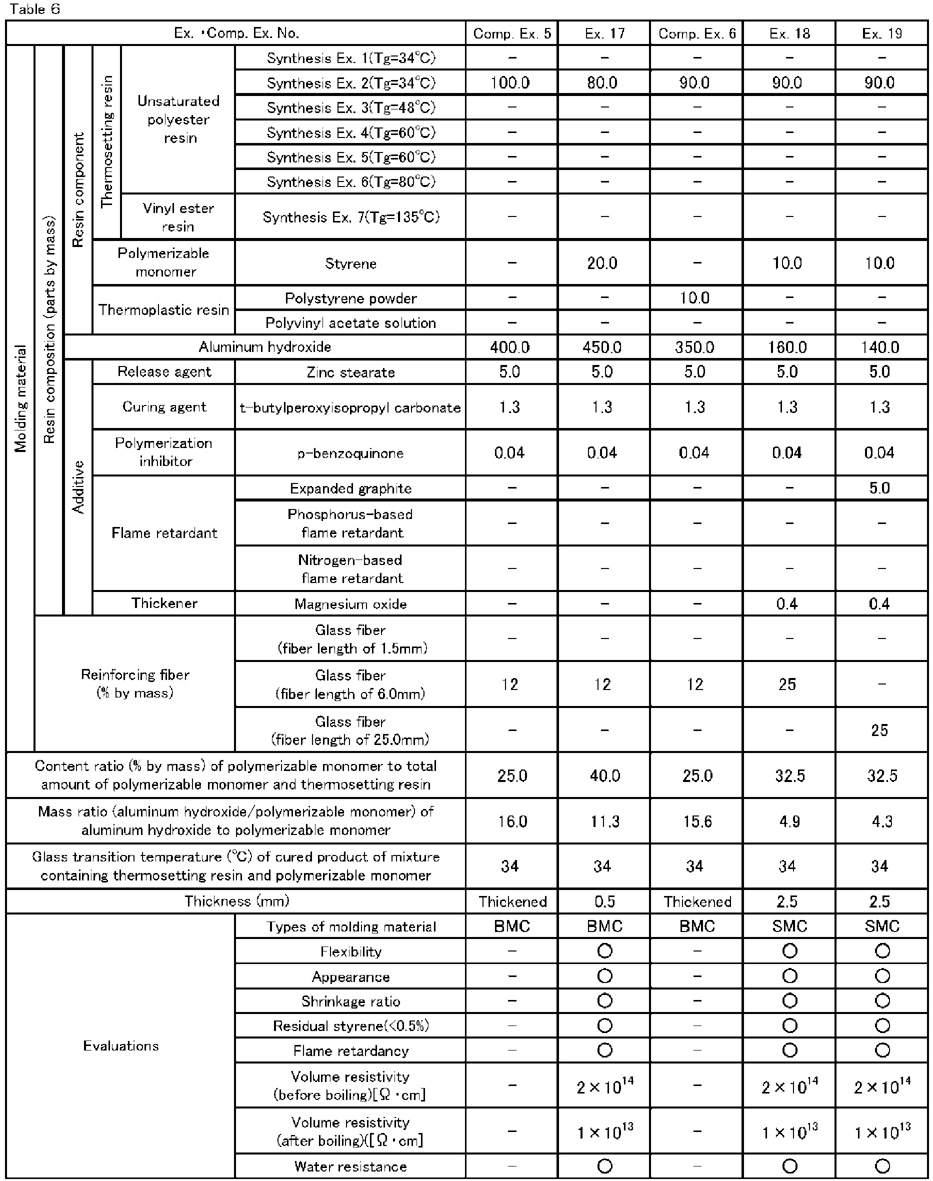

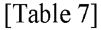

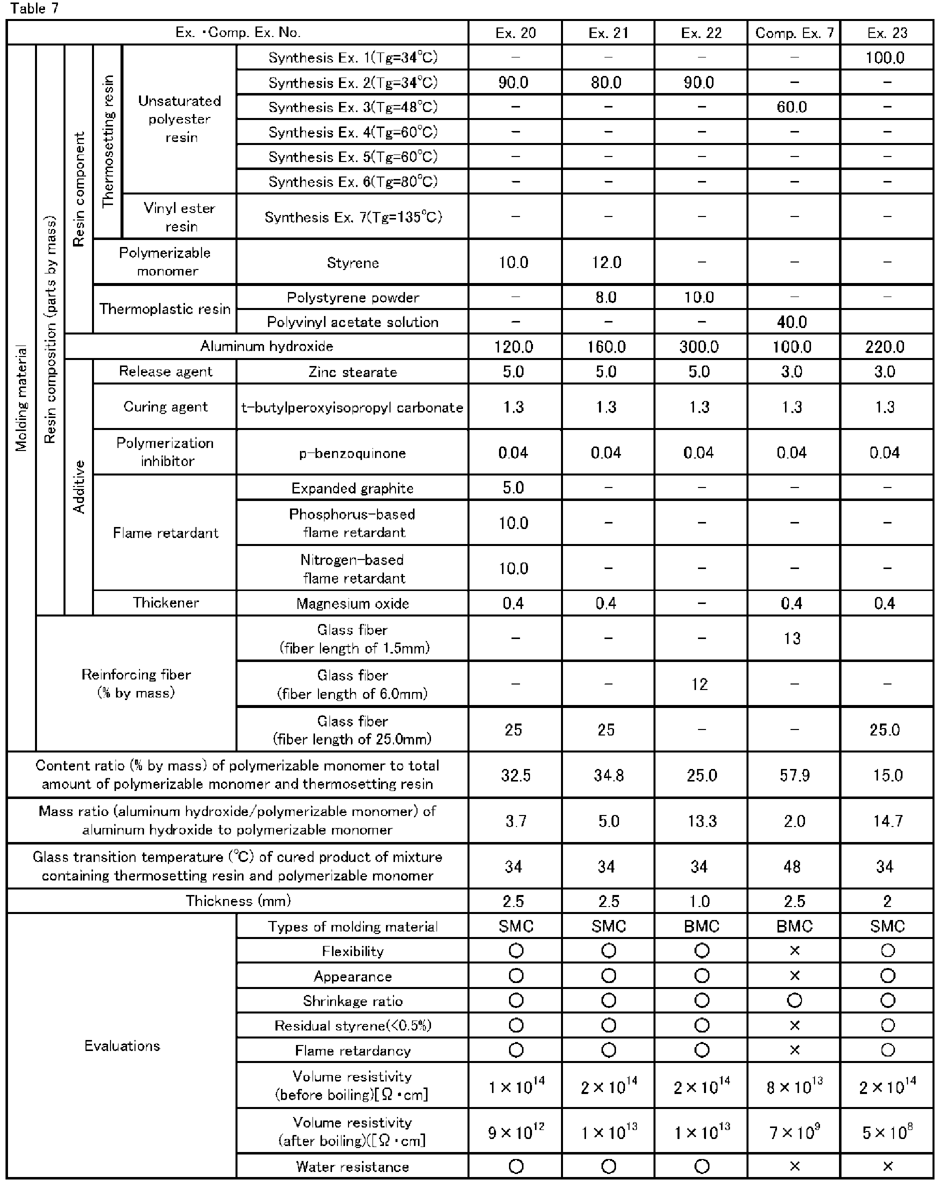

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The resin composition, molding material, and fire-resistant material of the present invention are suitably used, for example, for the production of fire-resistant sheets.

## Claims

1. A resin composition comprising:
a resin component containing a thermosetting resin containing an unsaturated polyester, and a polymerizable monomer; and
aluminum hydroxide,
wherein a glass transition temperature when a mixture of the thermosetting resin and the polymerizable monomer is cured is 0°C or more and 60°C or less,
wherein a content ratio of the polymerizable monomer with respect to a total amount of the polymerizable monomer and the thermosetting resin is 40% by mass or less,
wherein a content ratio of the aluminum hydroxide with respect to 100 parts by mass of the resin component is 120 parts by mass or more, and
wherein a mass ratio of the aluminum hydroxide with respect to the polymerizable monomer is 15.0 or less.

2. The resin composition according to claim 1,
wherein the unsaturated polyester is a reaction product of a polybasic acid and a polyhydric alcohol, and
wherein the polybasic acid includes a straight-chain saturated aliphatic dibasic acid having 8 or more carbon atoms.

3. The resin composition according to claim 1,
wherein the resin component does not contain a thermoplastic resin, or
wherein when the resin component contains a thermoplastic resin, a content ratio of the thermoplastic resin with respect to the resin component is 5% by mass or less.

4. A molding material comprising:
the resin composition according to any one of claims 1 to 3; and
reinforcing fibers.

5. A fire-resistant material comprising: a cured product of the molding material according to claim 4.
